# EUROPEAN PATENT SPECIFICATION

(11) **EP 1 195 574 B1**
(45) Date of publication and mention of the grant of the patent: **23.11.2005**
(21) Application number: 01123210.5
(22) Date of filing: 01.10.2001
(51) Int. Cl.: F41G 3/22

(54) **Gaze-actuated information system**
Blickbetätigtes Informationsystem
Système d'information actionné par le regard

(30) Priority: 03.10.2000 IL 13883100
(43) Date of publication of application: 10.04.2002
(73) Proprietor: Rafael-Armament Development Authority Ltd., 31021 Haifa (IL)
(72) Inventor: Tsafrir, Ben-Ari, Nahalal 10600 (IL); Ronen, Ben-Horin, Haifa 34789 (IL)
(74) Representative: Modiano, Micaela Nadia

(56) References cited:
- EP-A- 0 294 101
- US-A- 5 583 795
- US-A- 5 646 525

## Description

### FIELD AND BACKGROUND OF THE INVENTION

The present invention relates to systems for providing information to the pilot of an aircraft and, in particular, it concerns a system for providing selected information to a pilot based on his gaze-direction without use of a visual display. In one application, the invention specifically addresses the control interface between a pilot and a weapon system through which the pilot designates and verifies tracking of a target by the weapon system.

The extremely high speed of modern air-to-air combat stretches the capabilities of a human pilot to their limits. Faced with complex aircraft instrumentation and high-tech weapon systems, a pilot is required to achieve split-second reaction times as supersonic aircraft pass each other at relative speeds up to thousands of miles per hour. Various high performance target-seeking air-to-air missiles have been developed to operate under these conditions. Nevertheless, the process of cueing such missiles and verifying that they are locked-on to the correct target before firing may be extremely difficult for the pilot, especially while simultaneously flying an aircraft under conditions of constantly varying orientation, extreme inertial forces and high stress.

To facilitate rapid designation of targets, a head-up display is typically used to indicate the current cueing direction. A display symbol representing the direction of regard of the missile seeker is brought into superposition with a directly viewed target and the seeker is then allowed to track the target. If the pilot sees that the display symbol is following the viewed target, he knows that the tracking is proceeding properly and can proceed to fire the missile.

Many state-of-the-art systems employ a helmet-mounted head-up display. In this case, the seeker typically follows an optical axis of the display which moves together with the helmet, the helmet position being monitored either by a magnetic or an optical system. Cueing is achieved by the pilot turning his head, and hence the helmet, to bring the optical axis into alignment with the target. Examples of such systems are commercially available, amongst others, from Elbit Ltd. (Israel) and Comulus (South Africa).

Despite the major technological advances which have been made in the implementation of helmet-mounted displays and cueing systems, such systems still suffer from a large number of disadvantages, as will now be detailed.

Firstly, the components mounted in the helmet add greatly to the weight of the helmet. This weight becomes multiplied numerous times under high-acceleration conditions, becoming a major source of fatigue and stress for the pilot.

Secondly, these systems generally require alignment of the optical axis of the helmet with the target to be designated. This limits operation of the system to the angular range of helmet motion which the pilot can achieve. This is typically smaller than the actual field of view both of the pilot and of the seeker of the air-to-air missiles, thereby limiting performance unnecessarily. Furthermore, shifting of the entire head together with the heavy helmet to the required angle under high acceleration conditions may require great effort, and may cause significant delay in the cueing procedure.

Thirdly, the helmet-mounted display typically requires very substantial connections between the helmet and other devices within the aircraft. These connections generally include a significant power supply and electrical and/or optical fibers for carrying projected information for the display. Such connections pose a significant safety hazard for the pilot, particularly with respect to emergency ejection where a special guillotine is required to sever the connections in case of emergency. The supply of a high voltage power line to within the helmet is also viewed as a particular safety hazard.

Finally, the integration of a head mounted display and cueing system into the aircraft systems is a highly expensive project, requiring adaptation of numerous subsystems, with all the complications of safety and reliability evaluation procedures and the like which this entails.

In addition to the specific issue of cueing and verifying correct tracking of weapon systems, modern aircraft include multiple information systems which in many cases generate information relating to objects or locations visible to the pilot. Such systems typically include radar and navigation systems of various types, as well as data systems. In many cases, DataLink (DL) systems are provided which can offer a wide variety of information, such as identifying other aircraft as friendly or hostile, identifying the type of aircraft and even provide information regarding the armament of the aircraft. Navigation related information typically includes the identity of various visible landmarks such mountains or cities. Commercially available examples of such systems in the U.S. include the systems known by the names "Link4" and Link16". In many cases it would be highly advantageous to provide this information on a head-up display so that it would be visually linked in an intuitive way to the pilot's field of view. This however can only be achieved over a useful field of view by employing a helmet-mounted display with all of the aforementioned disadvantages.

Turning now to the field of eye-motion tracking, various techniques have been developed for identifying the gaze direction of the human eye. Examples of a number of commercially available systems for tracking eye movements may be obtained from ASL Applied Science Laboratories (Bedford, MA, USA).

U.S. Patent No. 5,583,795 to Smyth proposes a helmet-mounted apparatus for measuring eye gaze while providing a helmet-mounted display. Brief reference is made to the possibility of using the apparatus for "designating targets" and "weapon system pointing". Such a system, however, would still suffer from most of the aforementioned shortcomings associated with helmet-mounted display systems.

There is therefore a need for a gaze-actuated information system which would facilitate rapid and reliable cueing and tracking verification of air-to-air missiles without the pilot having to turn his entire head and without requiring substantial additional connections or expensive modification of aircraft systems. It would also be highly advantageous to provide a method for providing information, including confirming that a weapon system is locked-on to a visible target, without requiring use of a visual display.

### SUMMARY OF THE INVENTION

The present invention is a gaze-actuated information system and method which provides information associated with various gaze directions within a field of view. Amongst other applications, the system and method may be used for confirming that a weapon system is locked-on to a visible target without use of a visual display. This allows the helmet-mounted parts of the system to be implemented as lightweight components, thereby rendering the helmet much lighter and easier to use than systems with helmet-mounted displays.

According to the teachings of the present invention there is provided, a method for providing a pilot with information associated with at least one region of a field of view visible to the pilot from within a cockpit without requiring a visual display, the method comprising the steps of: (a) determining an eye gaze direction relative to a given frame of reference for at least one eye of the pilot; (b) determining a reference direction relative to the given frame of reference; (c) comparing the eye gaze direction with the reference direction; and (d) if the eye gaze direction and the reference direction are equal to within a given degree of accuracy, generating audio output audible to the pilot and indicative of information associated with the reference direction.

According to a further feature of the present invention, the reference direction corresponds to a direction from a weapon system to a target to which the weapon system is locked-on, such that the audio output provides confirmation that the weapon system is locked-on to a target at which the pilot is currently gazing.

According to a further feature of the present invention, the reference direction corresponds to a direction from the cockpit to a friendly aircraft, such that the audio output provides an indication that an aircraft at which the pilot is currently gazing is friendly.

According to a further feature of the present invention, the reference direction corresponds to a direction from the cockpit to a hostile aircraft, such that the audio output provides an indication that an aircraft at which the pilot is currently gazing is hostile.

According to a further feature of the present invention, the reference direction corresponds to a direction from the cockpit to a landmark, such that the audio output provides information relating to the landmark at which the pilot is currently gazing.

According to a further feature of the present invention, the given degree of accuracy corresponds to a maximum allowed angular discrepancy between the eye gaze direction and the reference direction, the maximum allowed discrepancy having a value of less than 5°, and preferably less than 2°.

According to a further feature of the present invention, the determining an eye gaze direction includes: (a) employing a helmet-mounted system to derive direction information related to a relative eye gaze direction for at least one eye of the pilot relative to a helmet worn by the pilot; (b) transmitting the direction information via a cordless communications link to a receiver unit; (c) deriving position information related to a position of the helmet within a cockpit; and (d) processing the direction information and the position information to derive the eye gaze direction relative to a frame of reference associate with the cockpit.

According to a further feature of the present invention, the helmet-mounted system and a helmet-mounted portion of the cordless communications link are implemented using low-power electrical components powered exclusively by at least one helmet-mounted battery.

There is also provided according to the teachings of the present invention, a gaze-actuated information system for providing a pilot with information associated with at least one region of a field of view visible to the pilot from within a cockpit without requiring a visual display, the system comprising: (a) a gaze-direction determining system deployed within the cockpit and configured to determine a current gaze direction of the pilot relative to the cockpit; (b) a direction correlation system associated with the gaze-direction determining system and configured to compare the current gaze direction with at least one reference direction and to generate a correlation signal when the current gaze direction is equal to the reference direction within a predefined margin of error; and (c) an audio output system associated with the direction correlation system and configured to be responsive to the correlation signal to generate audio output audible to the pilot and indicative of information related to the reference direction.

According to a further feature of the present invention, there is also provided a weapon system including a seeker operative to track a target, the weapon system generating a current target direction corresponding to the direction from the seeker to the target being tracked, the direction correlation system being associated with the weapon system and configured to employ the current target direction as one of the reference directions such that, when the pilot looks towards the target, the audio output system generates audio output indicative that the currently viewed target is being tracked.

According to a further feature of the present invention, the gaze-direction determining system includes: (a) a helmet-mounted system configured to derive relative direction information related to a relative eye gaze direction for at least one eye of the pilot relative to a helmet worn by the pilot; and (b) a helmet positioning system configured to derive position information related to a position of the helmet within the cockpit.

According to a further feature of the present invention, the gaze-direction determining system further includes a transmitter deployed for transmitting a wireless signal containing information from the helmet-mounted system.

According to a further feature of the present invention, the helmet-mounted system and the transmitter are implemented using low-power electrical components powered exclusively by at least one helmet-mounted battery.

There is also provided according to the teachings of the present invention, a method for providing to a pilot confirmation that a weapon system is locked-on to a visible target without use of a visual display, the method comprising the steps of: (a) determining an eye gaze direction relative to a given frame of reference for at least one eye of the pilot; (b) determining a target direction representing the direction relative to the given frame of reference from the weapon system to the target to which the weapon system is locked-on; (c) comparing the eye gaze direction with the target direction; and (d) if the eye gaze direction and the target direction are equal to within a given degree of accuracy, generating a predefined audible signal to confirm that the weapon system is locked-on to a target at which the pilot is currently gazing.

According to a further feature of the present invention, the given degree of accuracy corresponds to a maximum allowed angular discrepancy between the eye gaze direction and the target direction, the maximum allowed discrepancy having a value of less than 5°, and preferably less than 2°.

According to a further feature of the present invention, the determining an eye gaze direction includes: (a) employing a helmet-mounted system to derive direction information related to a relative eye gaze direction for at least one eye of the pilot relative to a helmet worn by the pilot; (b) transmitting the direction information via a cordless communications link to a receiver unit; (c) deriving position information related to a position of the helmet within a cockpit; and (d) processing the direction information and the position information to derive the eye gaze direction relative to a frame of reference associate with the cockpit.

According to a further feature of the present invention, the helmet-mounted system and a helmet-mounted portion of the cordless communications link are implemented using low-power electrical components powered exclusively by at least one helmet-mounted battery.

### BRIEF DESCRIPTION OF THE DRAWINGS

The invention is herein described, by way of example only, with reference to the accompanying drawings, wherein:
FIG. 1 is a general block diagram illustrating the main sub-systems of a gaze-actuated information system, constructed and operative according to the teachings of the present invention, for providing a pilot with information associated with at least one region of a field of view visible to the pilot;
FIG. 2 is a more detailed block diagram illustrating the main components of a preferred implementation of the system of Figure 1 for operating air-to-air missiles;
FIG. 3 is a schematic representation of an aircraft employing the system of Figure 2;
FIG. 4 is a flow diagram illustrating the operation of the system of Figure 2;
FIG. 5 is a detailed flow diagram, corresponding to block **68** of Figure 4, illustrating a method according to the teachings of the present invention for confirming to a pilot that a weapon system is locked-on to a visible target without use of a visual display;
FIG. 6 is a more detailed block diagram illustrating the main components of an extended implementation of the system of Figure 1;
FIG. 7 is a flow diagram illustrating the operation of the system of Figure 6; and
FIG. 8 is a schematic representation of a field of view of a pilot illustrating the operation of the system of Figure 6.

### DESCRIPTION OF THE PREFERRED EMBODIMENTS

The present invention is a gaze-actuated information system and method which provides information associated with various gaze directions within a field of view. Amongst other applications, the system and method may be used for confirming that a weapon system is locked-on to a visible target without use of a visual display.

The principles and operation of systems and methods according to the present invention may be better understood with reference to the drawings and the accompanying description.

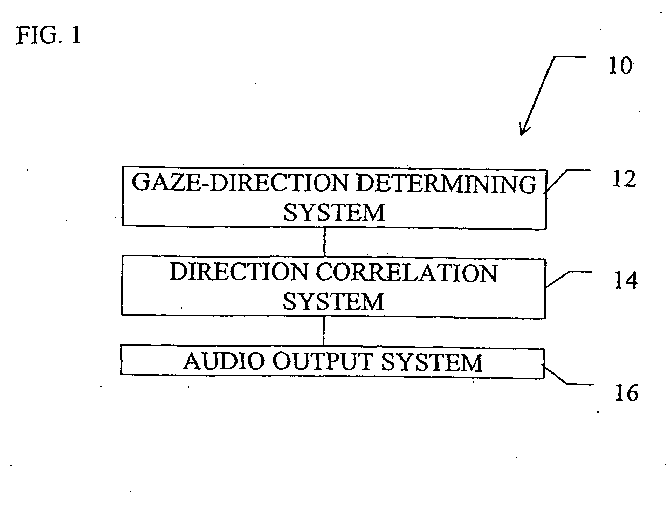

Referring now to the drawings, Figures 1-3 and 6 show a gaze-actuated information system, generally designated **10,** constructed and operative according to the teachings of the present invention, for providing a pilot with information associated with at least one region of a field of view visible to the pilot from within a cockpit without requiring a visual display.

Generally speaking, the system includes a gaze-direction determining system **12** deployed within the cockpit and configured to determine a current gaze direction of the pilot relative to the cockpit. A direction correlation system **14** is configured to compare the current gaze direction with at least one reference direction and to generate a correlation signal when the current gaze direction is equal to the reference direction within a predefined margin of error. An audio output system **16** is responsive to the correlation signal to generate audio output audible to the pilot and indicative of information related to the reference direction.

It will be readily appreciated that the system thus defined provides a highly advantageous combination of properties. On one hand, employing the gaze direction to identify objects about which the pilot wants information ensures that the information is related in an intuitive manner to the environment seen by the pilot. At the same time, since the information is provided as audio output, the aforementioned problems associated with helmet-mounted displays can be avoided. This and other advantages of the system and method of the present invention will become clearer from the following description and drawings.

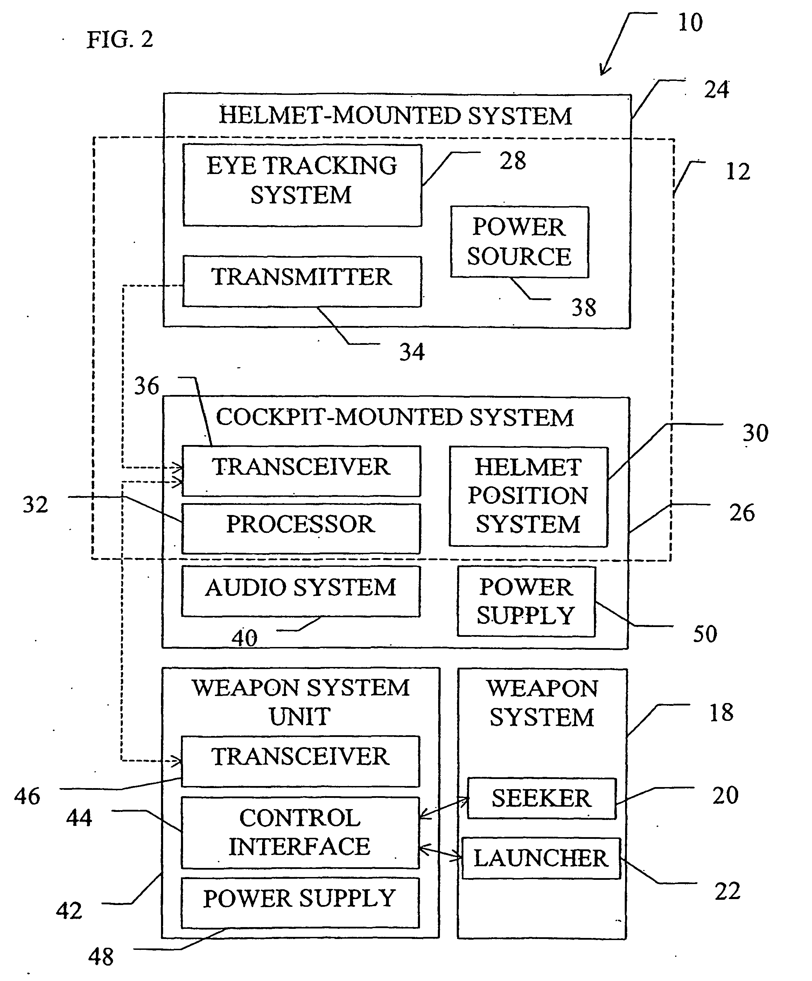

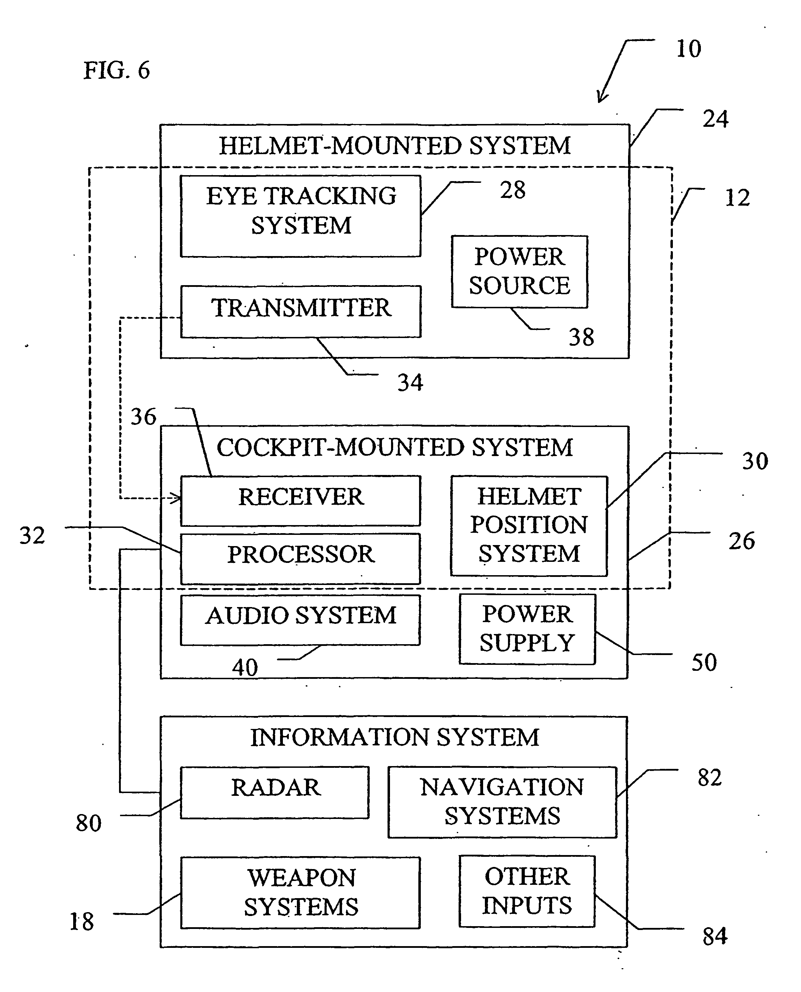

By way of non-limiting examples, the invention will be described in the context of two implementations. A first preferred implementation, detailed in Figures 2-5, illustrates an application of the system and method of the present invention to a dedicated weapon control system which can be implemented with minimal integration into existing aircraft systems. A second preferred implementation, detailed in Figures 6-8, relates to an extension of the system and method of the invention by integration into the aircraft systems to provide a range of additional information, preferably in addition to offering all the features of the implementation of Figures 2-5.

Turning now to Figures 2-5, there is shown an implementation of system **10** for controlling a weapon system **18,** particularly an air-to-air missile system, with a target-tracking seeker **20** and a launcher **22.** Weapon system **18** generates a current target direction corresponding to the direction from seeker **20** to a target currently being tracked. In this case, it is a particularly preferred feature of the present invention that direction correlation system **14** is configured to employ the current target direction as a reference direction such that, when the pilot looks towards the target, the audio output system generates audio output indicative that the currently viewed target is being tracked.

The various systems of Figure 1 are typically implemented as combinations of components which may be subdivided between two or more physical units. Thus, in Figure 2, the components together making up gaze-direction determining system **12** are subdivided between a helmet-mounted system **24** and a cockpit-mounted system **26.** Specifically, helmet-mounted system **24** preferably includes an eye tracking system **28** configured to derive relative direction information related to a relative eye gaze direction for at least one eye, and preferably both eyes, of the pilot relative to a helmet worn by the pilot. A helmet positioning system **30,** mounted wholly or mainly as part of cockpit-mounted system **26,** is configured to derive position information related to a position of the helmet within the cockpit. These two sets of information, providing the direction of the eye gaze relative to the helmet and the helmet position within the cockpit, are processed by a processor **32** to derive the eye gaze direction relative to a frame of reference moving with the cockpit.

Eye tracking system **28** may be of any type suitable for helmet mounting in a manner which will not significantly interfere with the pilot's performance. Typically, the system includes a transparent reflector positioned in front of the eye via which a miniature camera acquires images of the eye position. The required optical and computational technology is well documented in the literature and available in commercial products. By way of a non-limiting example, system **28** may be implemented as an off-the-shelf commercial unit, such as ASL Model 501, commercially available from Applied Science Laboratories of Bedford, MA (USA). In most cases, however, it is preferable to use a somewhat adapted unit which employs smaller reflectors mounted towards the sides of the face and compact cameras mounted at the sides, thereby improving the operational safety under flight conditions, and rendering the structure sufficiently strong to withstand forces of up to 10G. Such adaptations are within the capabilities of one ordinarily skilled in the art.

Similarly, helmet positioning system **30** may be any type of helmet position measuring system, including but not limited to, magnetic systems, and optical systems using active and/or passive markers. Optical systems are generally preferred for their reliability, simplicity and light helmet weight. An examples of a suitable helmet positioning system is the Guardian Helmet Tracker System commercially available from Cumulus (South Africa). Examples of generic spatial measurement systems of all three aforementioned types (magnetic, active optical and passive optical) are commercially available from NDI Northern Digital Inc. of Waterloo, Ontario (Canada).

As mentioned earlier, it is a particular feature of preferred implementations of the present invention that it can be implemented in a lightweight helmet without a helmet-mounted display. This avoids the need for heavy display components and high-voltage electrical connections to the helmet. Power to, and output from, eye tracking system **28** can optionally be transferred along the pre-existing communications wiring into the helmet in the form of low-voltage DC and high frequency signal modulation, respectively, as is known in the art of signal processing. In a more preferred implementation, however, the advantages of the present invention are enhanced by employing a wireless communications system to transfer data from eye-tracking system **28** to cockpit-mounted system **26.** Specifically, helmet-mounted system **24** preferably includes a transmitter **34** while cockpit-mounted system **24** preferably includes a corresponding receiver or transceiver **36.** The transmitter and transceiver preferably operate using a short range RF link.

In order to make the helmet-mounted system fully independent of wired connections, eye tracking system **28** and transmitter **34** are preferably implemented using low-power electrical components powered exclusively by at least one helmet-mounted battery **38.** Such a low-power, battery operated system requires further adaptation from the commercial systems mentioned above. Such adaptation, which is within the capabilities of one ordinarily skilled in the art, may be based upon the technology such as is used in the disposable imaging capsule developed by Given Imaging Ltd. of Yokneam (Israel) which includes a video camera and transmitter for outputting diagnostic medical imaging of the intestinal tract.

Direction correlation system **14** is typically implemented as a processor which receives gaze direction information from processor **32** and reference direction information from weapon system **18.** In the preferred implementation shown here, the direction correlation system is implemented using additional software modules within the same processor **32** as is employed for the gaze direction determining system.

Audio output system **16** is implemented using an audio system **40** which may be either a dedicated system or part of an existing audio system for providing radio communication or the like to the pilot. In either case, the sound must typically be provided to the pilot via the pre-existing headset (not shown) to compete with ambient noise levels. Depending upon the type of information to be provided (to be discussed below), audio output system **16** may include simple tone generators, or may be implemented with voice message capabilities, such as by provision of a voice synthesizer or prerecorded messages. The processing functions required by the audio output system may be provided as a separate processor within audio system **40,** or may also be integrated with processor **32,** as will be clear to one ordinarily skilled in the art.

As mentioned before, the implementation of Figure 2 is preferably implemented with minimal integration into the existing aircraft systems. To this end, the system preferably includes a weapon system unit **42** which is associated with each weapon system **18** for relaying seeker direction information from the weapon system directly to the cockpit-mounted system **26** without use of the aircraft electronics systems. Thus, weapon system unit **42** is shown here with a control interface **44** linked so as to receive information from seeker **20** and a transceiver **46** for transmitting target direction information to a cockpit-mounted transceiver. In the preferred case illustrated here, the communications link used is of a similar type to that between the helmet-mounted system and the cockpit-mounted system, allowing a single transceiver **36** to be used for both links. Alternatively, a separate wireless connection, such as a line-of-sight IR communications link, may be preferred.

Optionally, control interface **44** may additionally be linked to launcher **22** to actuate launching of the missile. Alternatively, the launching control system may be a conventional system operating via the existing aircraft systems and independent of the system components described here.

It will be appreciated that the system thus described is independent of the main electronic systems of the aircraft. Specifically, the only necessary electronic integration is performed directly with the seeker of the weapon system, independent of the aircraft systems. Since all directions are measured relative to a frame of reference moving with the aircraft, connection to the aircraft navigational systems may be avoided. The remaining connections may be limited to straightforward electrical connections to the pilot's audio headset and power supplies **48, 50** for weapon system unit **42** and cockpit-mounted system **26,** respectively. Optionally, one or both of power supplies **48, 50** can themselves be implemented as battery-operated units, thereby reducing the number of connections still further. In a further option, many existing aircraft systems provide an electrical audio connection from a signal generator within the missile launcher to the pilot's headset for signals generated on the basis of outputs from the missile. In such systems, audio system **40** can be implemented within weapon system unit **42** by providing suitable outputs to the existing signal generator. This may also allow further simplification of the system by avoiding the need for bi-directional wireless communication between cockpit-mounted system **26** and weapon system unit **42,** allowing transceiver **46** to be replaced with a receiver. These various options render the system particularly convenient as a retrofit addition to existing aircraft.

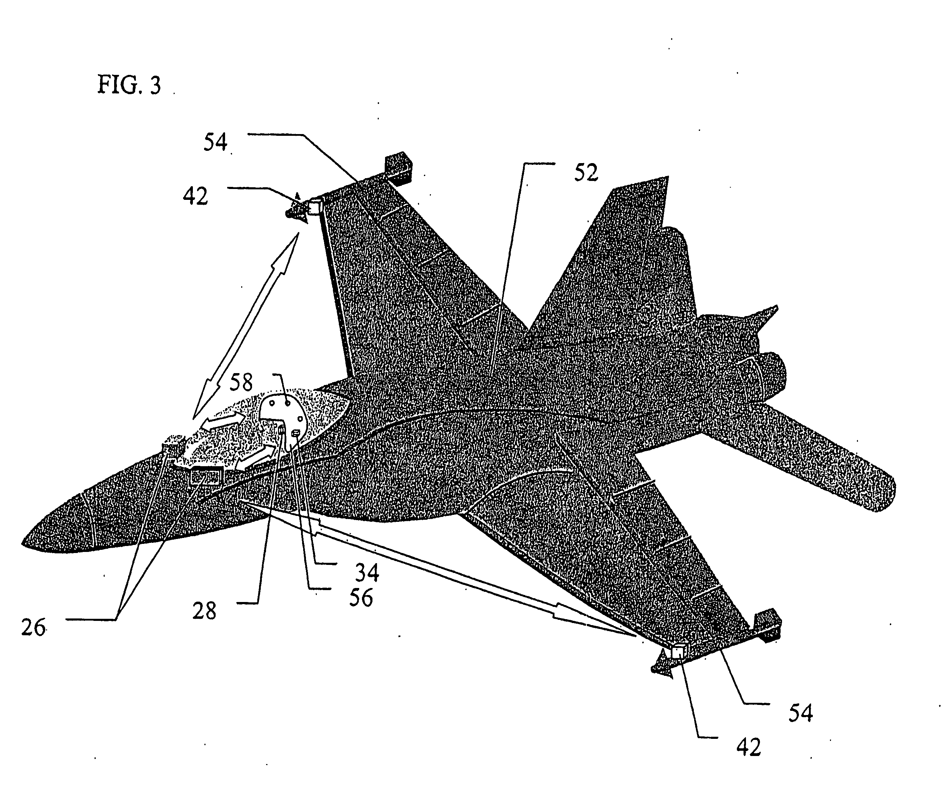

Figure 3 shows schematically the various components of the system of Figure 2 as deployed on an aircraft **52** carrying air-to-air missiles **54.** The pilot's helmet **56** carries the helmet-mounted system, including eye-tracking system **28** and transmitter **34,** as well as a number of optical markers **58** for use by the helmet positioning system. Mounted near the pilot is the cockpit-mounted system **26,** which may be subdivided into more than one unit and may have various components duplicated depending upon various design considerations (e.g., geometry of optical helmet positioning system, line-of-sight for communications link to weapon system units **42,** etc.). Cockpit-mounted system **26** is in communication with a weapon system unit **42** associated with each missile **54.** It will be appreciated that this representation is highly schematic and should not be taken to imply the actual size, shape or positioning of the various components.

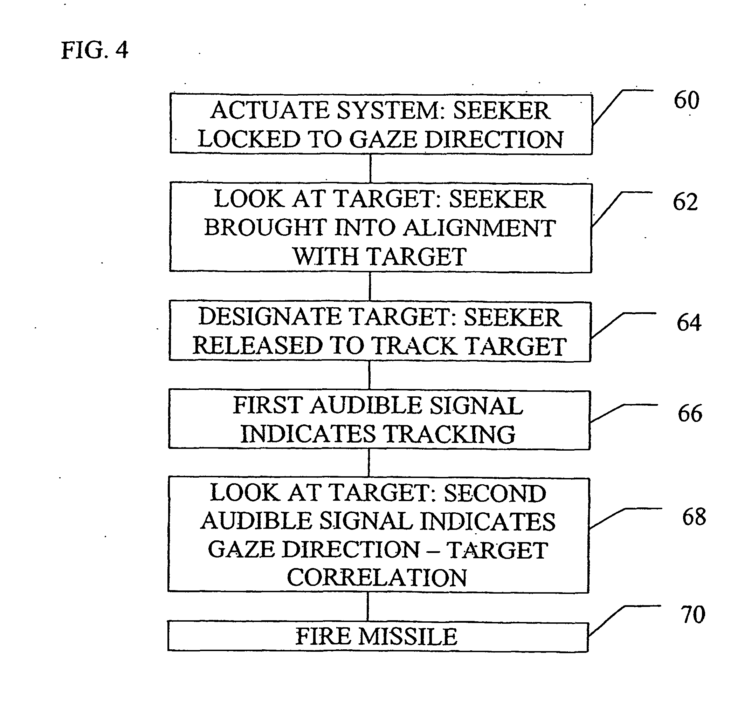

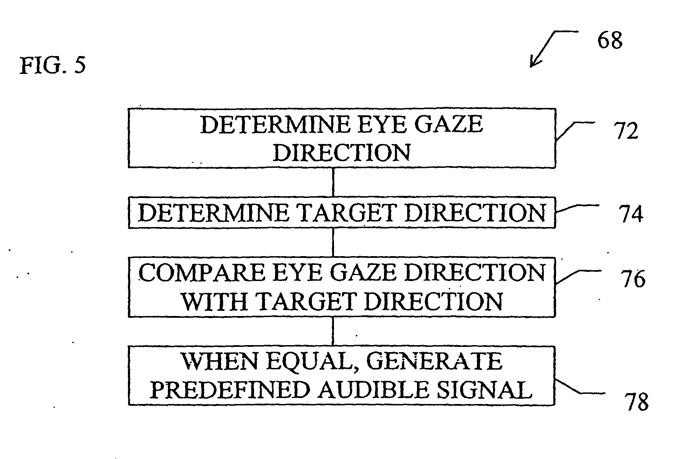

The operation of the system of Figures 2 and 3 is illustrated in Figures 4 and 5. Specifically, referring to Figure 5, when the system is initially actuated (step **60),** the gaze direction system preferably operates as an input system, providing a cueing direction to which seeker **20** is directed. This function is preferably also performed by control interface **44** in response to information transmitted from cockpit-mounted system **26.** The result is that the seeker is effectively locked to the pilot's gaze direction, following his gaze towards any object at which he is currently looking.

Once this system is operational, the process of designating a target becomes very straightforward and intuitive. The pilot first looks towards a given target (step **62**), thereby bringing the seeker into alignment with the target, and designates the target (step **64**), such as by depressing a control button. This releases the seeker from the gaze direction, allowing it to track the target freely. Preferably, at this point, audio system **40** produces a first audible signal (step **66**) to indicate to the pilot that the seeker has locked-on to a target and is continuing to track it.

At this point, having designated a target, the pilot must verify that the seeker has locked-on to the correct object (step **68**) before he can safely proceed to fire the missile (step **70**). In systems having a helmet-mounted head-up display, this verification would typically be performed by displaying a tracking symbol superimposed on the pilot's filed of view which would indicate the direction of the target currently being tracked. It is a particularly preferred feature of the system and method of the present invention that such verification can be performed quickly and reliably without requiring a helmet-mounted display, as will now be described with reference to Figure 5.

Specifically, verification step **68** includes determining the eye gaze direction relative to a given frame of reference for at least one eye of the pilot (step **72),** determining a target direction representing the direction relative to the given frame of reference from the weapon system to the target to which the weapon system is locked-on (step **74),** and comparing the eye gaze direction with the target direction (step **76**). When the eye gaze direction and the target direction are equal to within a given degree of accuracy, i.e., that the pilot is currently looking at the target which is being tracked, a predefined audible signal is generated to confirm that the weapon system is locked-on to the target at which the pilot is currently gazing (step **78**).

It will be readily apparent that this method of verification answers very well to the requirements of air-to-air combat. The audible signals can be simple tones which are immediately understood even under situations of great stress. The entire verification step typically takes place in a small fraction of a second, simply by glancing momentarily at the target. And by rendering the helmet-mounted display dispensable, the physical strain on the pilot is reduced while his level of safety is improved.

The criteria for correlation preferably corresponds to a maximum allowed angular discrepancy between the eye gaze direction and the target direction of less than 5°, and most preferably less than 2°. This is typically more than sufficient to allow for the sum total of all errors from the various measurement systems and the seeker.

Turning now to Figures 6-8, there is shown a second implementation of the system of Figure 1 in which the system is integrated with aircraft information systems to provide a range of additional information. The structure and operation of the system is largely similar to that of Figures 2-5, equivalent elements being labeled similarly.

As mentioned earlier, certain modern aircraft systems offer a wide range of information from various sources including, but not limited to, radar **80,** navigation systems **82,** weapon systems **18** and various other information systems and inputs **84.** By making this information available to processor **32,** it becomes possible to provide this information in an audible form related to, and in response to, the gaze direction of the pilot.

Unlike the implementation of Figures 2-5, this implementation preferably calculates the pilot's gaze direction in a frame of reference not moving with the aircraft in order to allow integration of a wider range of information sources. To this end, processor **32** preferably receives inputs from the various navigation systems relating to attitude and position of the aircraft. These systems are typically the conventional navigation systems of the aircraft which may include an inertial navigation systems, GPS, tilt sensors and other devices, and do not *per se* constitute part of the present invention. The gaze direction calculation thus becomes a function of the aircraft position, in addition to the relative direction of eye-gaze relative to the helmet and the relative position of the helmet within the cockpit. The resulting direction is preferably represented as a vector in a geo-stationary frame of reference such that it can readily be compared with locations defined geographically on the ground or in the sky.

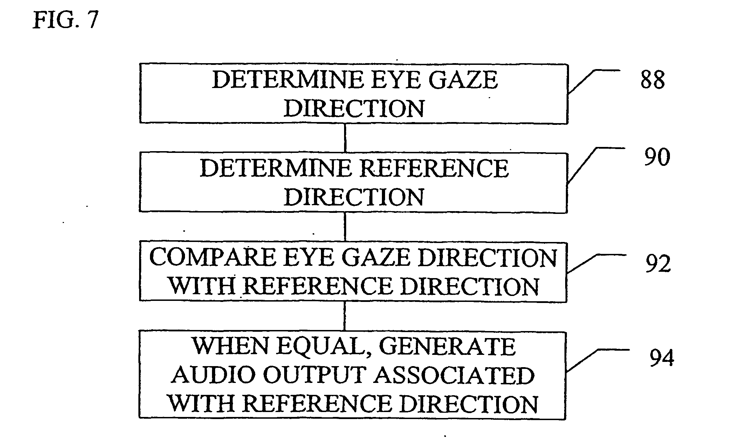

The operation of the system parallels the method described earlier. Specifically, with reference to Figure 7, the system first determines an eye gaze direction relative to a given frame of reference for at least one eye of the pilot (step **88**) and a reference direction relative to the given frame of reference (step **90**). The reference direction is chosen to correspond to a region of the pilot's field of view with which certain information is associated. The system then compares the eye gaze direction with the reference direction (step **92**) and, if the eye gaze direction and the reference direction are equal to within a given degree of accuracy, generates audio output audible to the pilot and indicative of the information associated with that reference direction (step **94**).

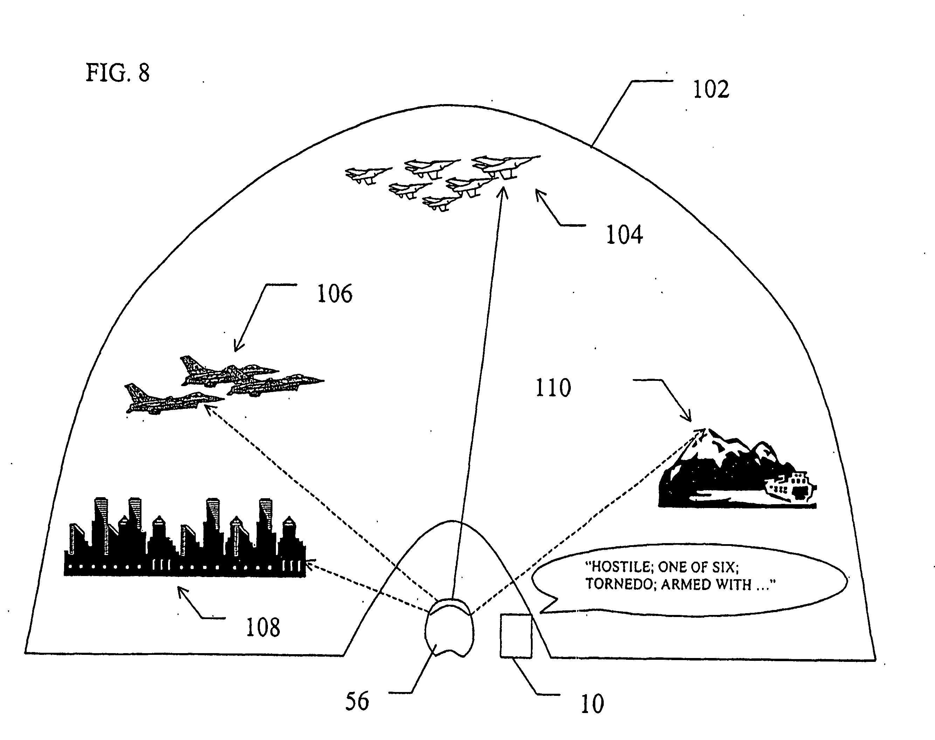

This functionality is illustrated pictorially in Figure 8 which shows the position of a helmet **56** and system **10** of the invention relative to a field of view **102** of the pilot. The field of view includes various distinctive objects, including hostile aircraft **104,** friendly aircraft **106** and geographical landmarks such as a city **108** and a mountain **110.** Information as to the positions of these various objects are provided to processor **32** from various sources such that a reference direction, represented by a dashed line, can be calculated for each. The actual gaze direction of the pilot, represented by a solid line, moves freely around the field of view. When it comes into alignment with one of the reference directions, system **10** provides information relating to that region of the field of view, typically in the form of a voice message. Thus, when looking at a hostile aircraft **104,** the system may provide whatever information is available relating to the aircraft, such as the fact that it is potentially hostile, the type of aircraft and its armaments (for example, derived from a combination of its radar signature and look-up tables of aircraft specifications). When looking at a friendly aircraft, the system may identify it as friendly (for example, on the basis of an encoded marker signal or the like) to avoid potentially dangerous confusion. When looking at a city or mountain, the system may identify the landmark to facilitate navigation.

During active combat, the system preferably provides the functions described above with reference to Figures 2-5, in addition to the aforementioned information. Optionally, some or all of the non-combat-related information may be suppressed during combat to remove all non-vital distractions.

It will be appreciated that the above descriptions are intended only to serve as examples, and that many other embodiments are possible within the spirit and the scope of the present invention as defined by the appended claims. Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method for providing a pilot with information associated with at least one region of a field of view visible to the pilot from within a cockpit without requiring a visual display, the method comprising the steps of:
(i) determining an eye gaze direction relative to a given frame of reference for at least one eye of the pilot;
(ii) determining a reference direction relative to said given frame of reference;
(iii) comparing said eye gaze direction with said reference direction; and
(iv) if said eye gaze direction and said reference direction are equal to within a given degree of accuracy, generating audio output audible to the pilot and indicative of information associated with said reference direction.

2. The method of claim 1, wherein said reference direction corresponds to a direction from a weapon system to a target to which the weapon system is locked-on, such that said audio output provides confirmation that the weapon system is locked-on to a target at which the pilot is currently gazing.

3. The method of claim 1, wherein said reference direction corresponds to a direction from the cockpit to a friendly aircraft, such that said audio output provides an indication that an aircraft at which the pilot is currently gazing is friendly.

4. The method of claim 1, wherein said reference direction corresponds to a direction from the cockpit to a hostile aircraft, such that said audio output provides an indication that an aircraft at which the pilot is currently gazing is hostile.

5. The method of claim 1, wherein said reference direction corresponds to a direction from the cockpit to a landmark, such that said audio output provides information relating to the landmark at which the pilot is currently gazing.

6. The method of claim 1, wherein said given degree of accuracy corresponds to a maximum allowed angular discrepancy between said eye gaze direction and said reference direction, said maximum allowed discrepancy having a value of less than 5°.

7. The method of claim 1, wherein said given degree of accuracy corresponds to a maximum allowed angular discrepancy between said eye gaze direction and said reference direction, said maximum allowed discrepancy having a value of less than 2°.

8. The method of claim 1, wherein said determining an eye gaze direction includes:
(i) employing a helmet-mounted system to derive direction information related to a relative eye gaze direction for at least one eye of the pilot relative to a helmet worn by the pilot;
(ii) transmitting said direction information via a cordless communications link to a receiver unit;
(iii) deriving position information related to a position of said helmet within a cockpit; and
(iv) processing said direction information and said position information to derive said eye gaze direction relative to a frame of reference associate with said cockpit.

9. The method of claim 8, wherein said helmet-mounted system and a helmet-mounted portion of said cordless communications link are implemented using low-power electrical components powered exclusively by at least one helmet-mounted battery.

10. A gaze-actuated information system for providing a pilot with information associated with at least one region of a field of view visible to the pilot from within a cockpit without requiring a visual display, the system comprising:
(i) a gaze-direction determining system deployed within the cockpit and configured to determine a current gaze direction of the pilot relative to the cockpit;
(ii) a direction correlation system associated with said gaze-direction determining system and configured to compare said current gaze direction with at least one reference direction and to generate a correlation signal when said current gaze direction is equal to said reference direction within a predefined margin of error; and
(iii) an audio output system associated with said direction correlation system and configured to be responsive to said correlation signal to generate audio output audible to the pilot and indicative of information related to said reference direction.

11. The gaze-actuated information system of claim 10, further comprising a weapon system including a seeker operative to track a target, said weapon system generating a current target direction corresponding to the direction from the seeker to the target being tracked, said direction correlation system being associated with said weapon system and configured to employ said current target direction as one of said reference directions such that, when the pilot looks towards the target, said audio output system generates audio output indicative that the currently viewed target is being tracked.

12. The gaze-actuated information system of claim 10, wherein said gaze-direction determining system includes:
(i) a helmet-mounted system configured to derive relative direction information related to a relative eye gaze direction for at least one eye of the pilot relative to a helmet worn by the pilot; and
(ii) a helmet positioning system configured to derive position information related to a position of said helmet within the cockpit.

13. The gaze-actuated information system of claim 12, wherein said gaze-direction determining system further includes a transmitter deployed for transmitting a wireless signal containing information from said helmet-mounted system.

14. The gaze-actuated information system of claim 13, wherein said helmet-mounted system and said transmitter are implemented using low-power electrical components powered exclusively by at least one helmet-mounted battery.

15. A method for providing to a pilot confirmation that a weapon system is locked-on to a visible target without use of a visual display, the method comprising the steps of:
(i) determining an eye gaze direction relative to a given frame of reference for at least one eye of the pilot;
(ii) determining a target direction representing the direction relative to said given frame of reference from the weapon system to the target to which the weapon system is locked-on;
(iii) comparing said eye gaze direction with said target direction; and
(iv) if said eye gaze direction and said target direction are equal to within a given degree of accuracy, generating a predefined audible signal to confirm that the weapon system is locked-on to a target at which the pilot is currently gazing.

16. The method of claim 15, wherein said given degree of accuracy corresponds to a maximum allowed angular discrepancy between said eye gaze direction and said target direction, said maximum allowed discrepancy having a value of less than 5°.

17. The method of claim 15, wherein said given degree of accuracy corresponds to a maximum allowed angular discrepancy between said eye gaze direction and said target direction, said maximum allowed discrepancy having a value of less than 2°.

18. The method of claim 15, wherein said determining an eye gaze direction includes:
(i) employing a helmet-mounted system to derive direction information related to a relative eye gaze direction for at least one eye of the pilot relative to a helmet worn by the pilot;
(ii) transmitting said direction information via a cordless communications link to a receiver unit;
(iii) deriving position information related to a position of said helmet within a cockpit; and
(iv) processing said direction information and said position information to derive said eye gaze direction relative to a frame of reference associate with said cockpit.

19. The method of claim 18, wherein said helmet-mounted system and a helmet-mounted portion of said cordless communications link are implemented using low-power electrical components powered exclusively by at least one helmet-mounted battery.

## Patentansprüche

1. Ein Verfahren, damit einem Piloten eine Information bereitgestellt wird, die mit mindestens einem für den Piloten vom Cockpit aus sichtbaren Sichtfeldbereich verknüpft ist, ohne dass eine visuelle Anzeige erforderlich ist, wobei das Verfahren folgende Schritte umfasst:
(i) das Bestimmen einer Augen-Blickrichtung relativ zu einem gegebenen Bezugsrahmen für mindestens ein Auge des Piloten;
(ii) das Bestimmen einer Bezugsrichtung relativ zum gegebenen Bezugsrahmen;
(iii) das Vergleichen der Augen-Blickrichtung mit der Bezugsrichtung; und
(iv) wenn die Augen-Blickrichtung und die Bezugsrichtung innerhalb eines gegebenen Genauigkeitsgrads gleich sind, das Erzeugen einer für den Piloten hörbaren Audioausgabe, die auf die mit der Bezugsrichtung verknüpfte Information hinweist.

2. Das Verfahren nach Anspruch 1, worin die Bezugsrichtung einer Richtung von einem Waffensystem zu einem Ziel entspricht, auf das das Waffensystem fixiert ist, so dass die Audioausgabe die Bestätigung dazu bereitstellt, dass das Waffensystem auf ein Ziel fixiert ist, auf das der Pilot gegenwärtig blickt.

3. Das Verfahren nach Anspruch 1, worin die Bezugsrichtung einer Richtung vom Cockpit zu einem freundlichen Flugzeug entspricht, so dass die Audioausgabe eine Anzeige darüber bereitstellt, dass ein Flugzeug, auf das der Pilot gegenwärtig blickt, freundlich ist.

4. Das Verfahren nach Anspruch 1, worin die Bezugsrichtung einer Richtung vom Cockpit zu einem befeindeten Flugzeug entspricht, so dass die Audioausgabe eine Anzeige darüber bereitstellt, dass ein Flugzeug, auf das der Pilot gegenwärtig blickt, feindlich ist.

5. Das Verfahren nach Anspruch 1, worin die Bezugsrichtung einer Richtung vom Cockpit zu einer Landmarke entspricht, so dass die Audioausgabe eine Information bereitstellt, die die Landmarke betrifft, auf die der Pilot gegenwärtig blickt.

6. Das Verfahren nach Anspruch 1, worin der gegebene Genauigkeitsgrad einer maximal gestatteten Winkeldiskrepanz zwischen der Augen-Blickrichtung und der Bezugsrichtung entspricht, wobei die maximal erlaubte Diskrepanz einen Wert hat, der kleiner als 5° ist.

7. Das Verfahren nach Anspruch 1, worin der gegebene Genauigkeitsgrad einer maximal gestatteten Winkeldiskrepanz zwischen der Augen-Blickrichtung und der Bezugsrichtung entspricht, wobei die maximal erlaubte Diskrepanz einen Wert hat, der kleiner als 2° ist.

8. Das Verfahren nach Anspruch 1, worin die Bestimmung einer Augen-Blickrichtung folgendes einschließt:
(i) das Benutzen eines am Helm installierten Systems, um eine Richtungsinformation abzuleiten, die eine relative Augen-Blickrichtung für mindestens ein Auge des Piloten relativ zu einem vom Piloten getragenen Helm betrifft;
(ii) das Übertragen der Richtungsinformation über eine schnurlose Kommunikationsverbindung an eine Empfängereinheit;
(iii) das Ableiten der Positionsinformation, die eine Position des Helms in einem Cockpit betrifft; und
(iv) das Verarbeiten der Richtungsinformation und der Positionsinformation, um die Augen-Blickrichtung relativ zu einem mit dem Cockpit verknüpften Bezugsrahmen abzuleiten.

9. Das Verfahren nach Anspruch 8, worin das am Helm montierte System und ein am Helm montierter Abschnitt der schnurlosen Kommunikationsverbindung mittels Verwendung von elektrischen Niederleistungskomponenten implementiert werden, die ausschließlich von mindestens einer am Helm angebrachten Batterie betrieben werden.

10. Ein Blick-betätigtes Informationssystem, um einem Piloten eine Information bereitzustellen, die mit mindestens einem für den Piloten vom Cockpit aus sichtbaren Sichtfeldbereich verknüpft ist, ohne dass eine visuelle Anzeige erforderlich ist, wobei das System folgendes umfasst:
(i) ein Blickrichtungsbestimmungssystem, das innerhalb des Cockpits angebracht ist und aufgebaut ist, um eine gegenwärtige Blickrichtung des Piloten relativ zum Cockpit zu bestimmen;
(ii) ein Richtungskorrelationssystem, das mit dem Blickrichtungsbestimmungssystem verknüpft ist und aufgebaut ist, um die gegenwärtige Blickrichtung mit mindestens einer Bezugsrichtung zu vergleichen und um ein Korrelationssignal zu erzeugen, wenn die gegenwärtige Blickrichtung innerhalb einer vorab bestimmten Fehlergrenze gleich mit der Bezugsrichtung ist; und
(iii) ein mit die Richtungskorrelationssystem verknüpftes Audioausgabesystem, das aufgebaut ist, um auf das Korrelationssignal zu reagieren, damit es eine für den Piloten hörbare Audioausgabe erzeugt und die auf die Information hinweist, die die Bezugsrichtung betrifft.

11. Das Blick-betätigte Informationssystem nach Anspruch 10, das weiterhin ein Waffensystem umfasst, das einen Sucher einschließt, der operativ ist, um ein Ziel zu verfolgen, wobei das Waffensystem eine gegenwärtige Zielrichtung erzeugt, die der Richtung vom Sucher zum zu verfolgenden Ziel entspricht, wobei das Richtungskorrelationssystem mit dem Waffensystem verknüpft ist und aufgebaut ist, um die gegenwärtige Zielrichtung als eine der Bezugsrichtungen derart zu verwenden, dass das Audioausgabesystem, wenn der Pilot auf das Ziel schaut, eine Audioausgabe erzeugt, die darauf hinweist, dass das gegenwärtig betrachtete Ziel verfolgt wird.

12. Das Blick-betätigte Informationssystem nach Anspruch 10, worin das Blickrichtungsbestimmungssystem folgendes einschließt:
(i) ein am Helm installiertes System, das aufgebaut ist, um die relative Richtungsinformation äbzuleiten, die eine relative Augen-Blickrichtung für mindestens ein Auge des Piloten relativ zu einem vom Piloten getragenen Helm betrifft; und
(ii) ein Helmpositionierungssystem, das aufgebaut ist, um die Positionsinformation abzuleiten, die eine Stellung des Helms im Cockpit betrifft.

13. Das Blick-betätigte Informationssystem nach Anspruch 12, worin das Blickrichtungsbestimmungssystem weiterhin einen Sender einschließt, der zum Übertragen einer ein drahtloses Signal enthaltenden Information vom am Helm installierten System angebracht ist.

14. Das Blick-betätigte Informationssystem nach Anspruch 13, worin das am Helm angebrachte System und der Sender mittels Verwendung elektrischer Niederleistungskomponenten implementiert werden, die ausschließlich von mindestens einer am Helm installierten Batterie betrieben werden.

15. Ein Verfahren, damit einem Piloten ohne Verwendung einer visuellen Anzeige die Bestätigung bereitgestellt wird, dass ein Waffensystem auf ein sichtbares Ziel fixiert ist, wobei das Verfahren folgende Schritte umfasst:
(i) das Bestimmen einer Augen-Blickrichtung relativ zu einem gegebenen Bezugsrahmen für mindestens ein Auge des Piloten;
(ii) das Bestimmen einer Zielrichtung, die die Richtung relativ zum gegebenen Bezugsrahmen vom Waffensystem zum Ziel, auf das das Waffensystem fixiert ist, betrifft;
(iii) das Vergleichen der Augen-Blickrichtung mit der Zielrichtung; und
(iv) wenn die Augen-Blickrichtung und die Zielrichtung innerhalb eines gegebenen Genauigkeitsgrads gleich sind, das Erzeugen eines vorab definierten hörbaren Signals, das bestätigt, dass das Waffensystem auf ein Ziel fixiert ist, auf das der Pilote gegenwärtig blickt.

16. Das Verfahren nach Anspruch 15, worin der gegebene Genauigkeitsgrad einer maximal gestatteten Winkeldiskrepanz zwischen der Augen-Blickrichtung und der Zielrichtung entspricht, wobei die maximal erlaubte Diskrepanz einen Wert hat, der kleiner als 5° ist.

17. Das Verfahren nach Anspruch 15, worin der gegebene Genauigkeitsgrad einer maximal gestatteten Winkeldiskrepanz zwischen der Augen-Blickrichtung und der Zielrichtung entspricht, wobei die maximal erlaubte Diskrepanz einen Wert hat, der kleiner als 2° ist.

18. Das Verfahren nach Anspruch 15, worin die Bestimmung einer Augen-Blickrichtung folgendes einschließt:
(i) das Benutzen eines am Helm installierten Systems, um eine Richtungsinformation abzuleiten, die eine relative Augen-Blickrichtung für mindestens ein Auge des Piloten relativ zu einem vom Piloten getragenen Helm betrifft;
(ii) das Übertragen der Richtungsinformation über eine schnurlose Kommunikationsverbindung an eine Empfängereinheit;
(iii) das Ableiten der Positionsinformation, die eine Stellung des Helms in einem Cockpit betrifft; und
(iv) das Verarbeiten der Richtungsinformation und der Positionsinformation, um die Augen-Blickrichtung relativ zu einem mit dem Cockpit verknüpften Bezugsrahmen abzuleiten.

19. Das Verfahren nach Anspruch 18, worin das am Helm montierte System und ein am Helm montierter Abschnitt der schnurlosen Kommunikationsverbindung mittels Verwendung von elektrischen Niederleistungskomponenten implementiert werden, die ausschließlich von mindestens einer am Helm angebrachten Batterie betrieben werden.

## Revendications

1. Procédé pour fournir à un pilote des informations associées à au moins une région d'un champ de vision du pilote depuis l'intérieur d'un cockpit sans nécessiter un affichage visuel, le procédé comprenant les étapes de :
(i) détermination d'une direction du regard par rapport à un cadre de référence donné pour au moins un oeil du pilote ;
(ii) détermination d'une direction de référence par rapport au dit cadre de référence donné ;
(iii) comparaison de la dite direction du regard avec la dite direction de référence ; et
(iv) si la dite direction du regard et la dite direction de référence sont égales dans les limites d'un degré de précision donné, génération d'une sortie audio audible du pilote et indicative d'informations associées à la dite direction de référence.

2. Procédé selon la revendication 1, dans lequel la dite direction de référence correspond à une direction allant d'un système d'arme à une cible à laquelle le système d'arme est accroché, de sorte que la dite sortie audio fournit une confirmation que le système d'arme est accroché à une cible que le pilote est en train de regarder.

3. Procédé selon la revendication 1, dans lequel la dite direction de référence correspond à une direction allant du cockpit à un aéronef amical, de sorte que la dite sortie audio fournit une indication qu'un aéronef que le pilote est en train de regarder est amical.

4. Procédé selon la revendication 1, dans lequel la dite direction de référence correspond à une direction allant du cockpit à un aéronef hostile, de sorte que la dite sortie audio fournit une indication qu'un aéronef que le pilote est en train de regarder est hostile.

5. Procédé selon la revendication 1, dans lequel la dite direction de référence correspond à une direction allant du cockpit à un repère terrestre, de sorte que la dite sortie audio fournit une information relative au repère terrestre que le pilote est en train de regarder.

6. Procédé selon la revendication 1, dans lequel le dit degré de précision donné correspond à un désaccord angulaire autorisé maximal entre la dite direction du regard et la dite direction de référence, le dit désaccord maximal autorisé ayant une valeur inférieure à 5°.

7. Procédé selon la revendication 1, dans lequel le dit degré de précision donné correspond à un désaccord angulaire autorisé maximal entre la dite direction du regard et la dite direction de référence, le dit désaccord maximal autorisé ayant une valeur inférieure à 2°.

8. Procédé selon la revendication 1, dans lequel la dite détermination d'une direction du regard comprend :
(i) l'utilisation d'un système monté sur casque pour obtenir une information de direction liée à une direction relative du regard pour au moins un oeil du pilote par rapport à un casque porté par le pilote ;
(ii) la transmission de la dite information de direction via une liaison de communication sans fil à une unité de réception ;
(iii) l'obtention d'une information de position liée à une position du dit casque à l'intérieur d'un cockpit ; et
(iv) le traitement de la dite information de direction et de la dite information de position pour obtenir la dite direction du regard par rapport à un cadre de référence associé au dit cockpit.

9. Procédé selon la revendication 1, dans lequel le dit système monté sur casque et une partie montée sur casque de la dite liaison de communication sans fil sont réalisés au moyen de composants électriques de faible puissance alimentés exclusivement par au moins une pile montée sur casque.

10. Système d'information actionné par le regard pour fournir à un pilote une information associée à au moins une région d'un champ de vision visible du pilote de l'intérieur d'un cockpit sans nécessiter un affichage visuel, le système comprenant :
(i) un système de détermination de direction du regard installé à l'intérieur du cockpit et configuré pour déterminer une direction courante du regard du pilote par rapport au cockpit ;
(ii) un système de corrélation de direction associé au dit système de détermination de direction du regard et configuré pour comparer la dite direction courante du regard avec au moins une direction de référence et pour engendrer un signal de corrélation lorsque la dite direction courante du regard est égale à la dite direction de référence dans une marge d'erreur prédéfinie ; et
(iii) un système de sortie audio associé au dit système de corrélation de direction et configuré de manière à répondre au dit signal de corrélation pour engendrer une sortie audio audible du pilote et indicative d'une information liée à la dite direction de référence.

11. Système d'information actionné par le regard selon la revendication 10, comprenant en outre un système d'arme incluant un dispositif de recherche servant à suivre une cible, le dit système d'arme engendrant une direction courante de cible qui correspond à la direction allant du dispositif de recherche à la cible suivie, le dit système de corrélation de direction étant associé au dit système d'arme et configuré pour employer la dite direction courante de cible comme une des dites directions de référence de sorte que, lorsque le pilote regarde vers la cible, le dit système de sortie audio engendre une sortie audio indicative de ce que la cible présentement vue est suivie.

12. Système d'information actionné par le regard selon la revendication 10, dans lequel le dit système de détermination de direction du regard comprend :
(i) un système monté sur casque, configuré pour obtenir une information de direction relative liée à une direction relative du regard pour au moins un oeil du pilote par rapport à un casque porté par le pilote ; et
(ii) un système de positionnement de casque configuré pour obtenir une information de position liée à une position du dit casque dans le cockpit.

13. Système d'information actionné par le regard selon la revendication 12, dans lequel le dit système de détermination de direction du regard comprend en outre un émetteur prévu pour émettre un signal sans fil contenant des informations à partir du dit système monté sur casque.

14. Système d'information actionné par le regard selon la revendication 13, dans lequel le dit système monté sur casque et le dit émetteur sont réalisés au moyen de composants électriques de faible puissance alimentés exclusivement par au moins une pile montée sur casque.

15. Procédé pour donner confirmation à un pilote qu'un système d'arme est accroché à une cible visible, sans utilisation d'un affichage visuel, le procédé comprenant les étapes de :
(i) détermination d'une direction du regard par rapport à un cadre de référence donné pour au moins un oeil du pilote ;
(ii) détermination d'une direction de cible représentant la direction par rapport au dit cadre de référence donné, allant du système d'arme à la cible à laquelle le système d'arme est accroché ;
(iii) comparaison de la dite direction du regard avec la dite direction de cible ; et
(iv) si la dite direction du regard et la dite direction de cible sont égales dans les limites d'un degré donné de précision, génération d'un signal audible prédéfini pour confirmer que le système d'arme est accroché à une cible que le pilote est en train de regarder.

16. Procédé selon la revendication 15, dans lequel le dit degré donné de précision correspond à un désaccord angulaire permis maximal entre la dite direction du regard et la dite direction de cible, le dit désaccord maximal permis entre la dite direction du regard et la dite direction de cible, le désaccord maximal autorisé ayant une valeur inférieure à 5°.

17. Procédé selon la revendication 15, dans lequel le dit degré donné de précision correspond à un désaccord angulaire permis maximal entre la dite direction du regard et la dite direction de cible, le désaccord maximal autorisé ayant une valeur inférieure à 2°.

18. Procédé selon la revendication 15, dans lequel la dite: détermination d'une direction du regard comprend :
(i) l'utilisation d'un système monté sur casque pour obtenir une information de direction liée à une direction relative du regard pour au moins un oeil du pilote par rapport à un casque porté par le pilote ;
(ii) la transmission de la dite information de direction via une liaison de communication sans fil à une unité de réception ;
(iii) l'obtention d'une information de position liée à une position du dit casque à l'intérieur d'un cockpit ; et
(iv) le traitement de la dite information de direction et de la dite information de position pour obtenir la dite direction du regard par rapport à un cadre de référence associé au dit cockpit.

19. Procédé selon la revendication 18, dans lequel le dit système monté sur casque et une partie montée sur casque de la dite liaison de communication sans fil sont réalisés au moyen de composants électriques de faible puissance alimentés exclusivement par au moins une pile montée sur casque.
